# EUROPEAN PATENT SPECIFICATION

(11) **EP 4 289 265 B1**
(45) Date of publication and mention of the grant of the patent: **12.03.2025**
(21) Application number: 23178342.4
(22) Date of filing: 09.06.2023
(51) Int. Cl.: A01K 73/02, A01K 80/00

(54) **DISTURBING MEANS FOR A BEAM TRAWL FOR BOTTOM TRAWLING**
VERGRÄMUNGSMITTEL FÜR EIN GRUNDSCHLEPPNETZ FÜR DIE GRUNDSCHLEPPNETZFISCHEREI
MOYENS D'EFFARROUCHEMENT POUR UN CHALUT DE FOND POUR LA PÊCHE DE FOND

(30) Priority: 10.06.2022 NL 2032121
(43) Date of publication of application: 13.12.2023
(73) Proprietor: RapiD Engineering B.V., 8321 MA Urk (NL)
(72) Inventor: Post, Riekelt, 8321 RS Urk (NL); Keus, Johan, 3881 ZB Putten (NL)
(74) Representative: 't Jong, Bastiaan Jacob

(56) References cited:
- FR-E- 35 333
- US-A- 5 517 785

## Description

The invention relates to tickler means for a beam trawl for beam trawling.

In beam trawling a trawler with a trawl on either side travels the sea in order to catch fish. The trawls move along the bottom here so that mainly flatfish are caught.

Each trawl is suspended from a beam, or long bar, which is provided on either side with trawl heads with which the beam is positioned on the seabed. The trawl heads ensure that the beam lies about half a metre above the seabed, whereby the trawl is in effect held open so as to scoop up flatfish.

In order to ensure that flatfish will swim up from the seabed and so end up in the trawl, tickler means are arranged on the beam. These were originally metal chains which dragged along the seabed and so startled, i.e. tickled, the flatfish, such as is disclosed in US 5517785.

A considerable amount of energy is needed to drag the trawls, beam with trawl heads and tickler chains along the seabed. Beam trawling becomes less lucrative as energy costs rise. FR 35 333 E discloses the use of a helicoidal element for rotating tickler means.

Electric pulse fishing was developed to improve on beam trawling. The tickler chains have here been replaced by electrodes that emit electric pulses and so startle the fish. An energy saving of up to 20% is achieved with this method. In addition, more fish are caught because the electric pulses startle more fish and there is also less bycatch.

Licenses for electric pulse fishing have not been issues for some time, necessitating fishers to revert back to the less efficient method with tickler chains.

It is now an object to provide an alternative whereby the above stated drawbacks are reduced.

This object is achieved according to the invention with tickler means for a beam trawl for beam trawling, which tickler means comprise at least one spiral element, which at least one spiral element comprises:
- two spiral parts arranged concentrically around a longitudinal axis and together forming a double helix;
- a first yoke part which is attached with in each case an outer end of the first yoke part to one of the spiral parts at one end of the two spiral parts in longitudinal direction;
- a second yoke part which is attached with in each case an outer end of the second yoke part to one of the spiral parts at the other end of the two spiral parts in longitudinal direction;
- a first coupling with a first coupling part which is arranged on the first yoke part and a second coupling part which is arranged on the first coupling part for rotation around a rotation axis, wherein the rotation axis of the second coupling part is concentric with the longitudinal axis.

The at least one spiral element can pulled along the seabed in the same way as a tickler chain. Because the spiral element is however provided with two concentrically arranged spiral parts, which are arranged via the first yoke part to the rotating first coupling, the spiral part will begin to rotate around the longitudinal axis during the forward movement, whereby the tractive power will be reduced considerably.

Because the spiral element still moves along the seabed, flatfish will be startled and, owing to the considerably lower tractive power required, the fuel consumption will be lower relative to a tickler chain. The spiral elements will moreover disturb the seabed to a much lesser extent than if tickler chains were used.

The tickler means according to the invention are suitable for beam trawling, but can possibly also be applied in other fishing methods, such as sumwing trawling and twin-rig trawling.

In a preferred embodiment of the invention the tickler means further comprises an elongate first frame part with spiral elements arranged along the length of the frame part, wherein the second coupling part of each spiral element is arranged on the frame part and wherein the longitudinal axis of each spiral element lies substantially perpendicularly of the longitudinal axis of the first frame part.

The elongate frame part with the spiral elements thereon can be attached to the beam with chains or cables so that the height difference between the beam and the seabed can be accommodated and the spiral parts lie wholly on the seabed.

The elongate frame part furthermore keeps the distance between the spiral elements constant and prevents that the spiral elements move over one another and become entangled in each other.

In a further embodiment of the tickler means according to the invention the at least one spiral element further comprises a second coupling with a third coupling part which is arranged on the second yoke part and a fourth coupling part which is arranged on the third coupling part for rotation around a rotation axis, wherein the rotation axis of the fourth coupling part is concentric with the longitudinal axis.

With the first and second coupling a spiral element can be held in the correct direction and a spiral element is prevented from moving reciprocally due to irregularities in the seabed and thereby increasing the resistance, which would result in a higher energy consumption.

The tickler means according to the invention preferably further comprise an elongate second frame part on which the fourth coupling part of each spiral element is arranged along the length of the second frame part.

By attaching a number of spiral elements to a first frame part with the first coupling and to a second frame part with the second coupling the spiral elements are held parallel to each other, whereby they are unable to become entangled in each other and furthermore cannot deviate in direction individually, which would increase the resistance.

The spiral elements are preferably attached to the frame parts with the necessary play, whereby sufficient freedom of movement remains in an assembly of a number of spiral elements to be able to readily accommodate unevennesses in the seabed or collisions with rocks.

The invention further relates to a beam trawl for beam trawling, which beam trawl comprises:
- a beam with trawl heads arranged on either end;
- a trawl arranged on both trawl heads;
- a bridle for attachment to a fishing line, which bridle is coupled to the two trawl heads and the beam; and
- tickler means according to the invention arranged on the beam.

These and other features of the invention are further elucidated with reference to the accompanying drawings.
Figure 1 shows a schematic perspective view of a beam trawl according to the invention.
Figure 2 shows a detail of the underside of the beam trawl according to figure 1 in top view.
Figure 3 shows schematically a part of the tickler means according to figure 1.
Figure 4 shows a top view of a spiral element of the tickler means according to figure 3.

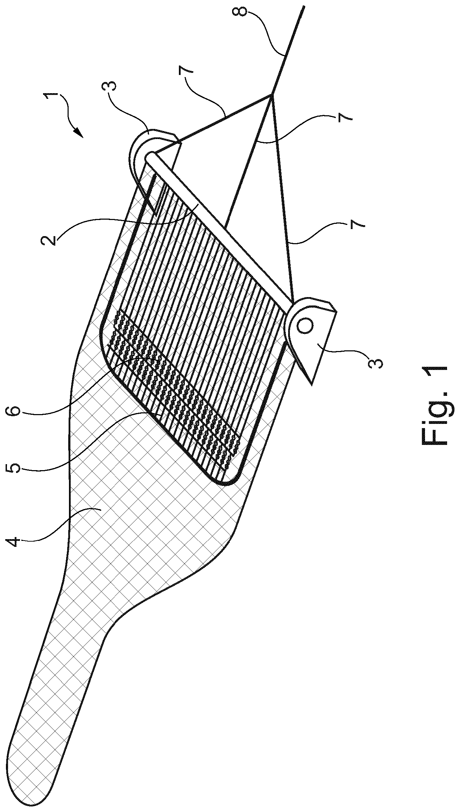

Figure 1 shows a schematic perspective view of a beam trawl 1 according to the invention. The beam trawl 1 has a beam 2 with trawl heads 3 on either end. Arranged on beam 2 and trawl heads 3 is a trawl 4 with a roller-ball ground gear 5. Upstream of the inlet of trawl 4 tickler means 6 are arranged on beam 2 and trawl heads 3. Finally, a bridle 7 of chains, whereby beam trawl 1 is coupled to a fishing line 8, is arranged on beam 2.

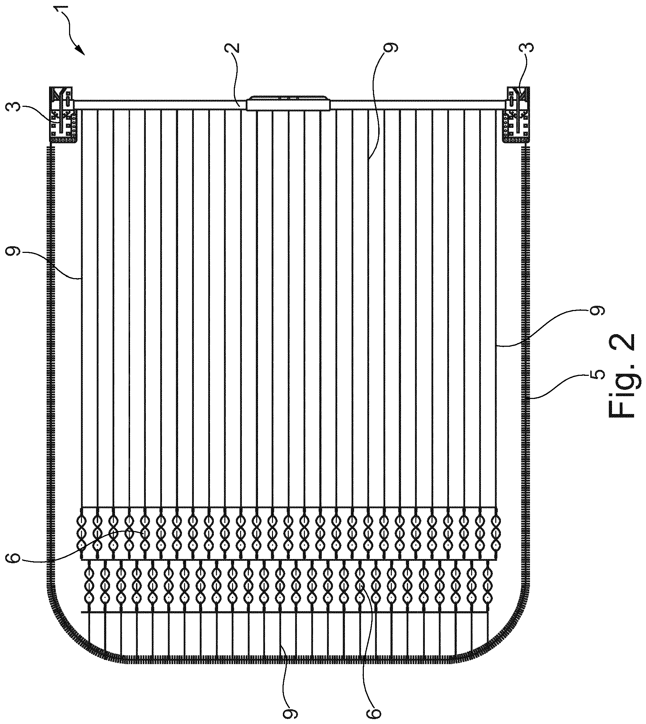

Figure 2 shows a detail of the underside of beam trawl 1 in top view. A U-shaped roller-ball ground gear 5 is arranged on trawl heads 3 which are arranged on either side of beam 2. The tickler means 6 are suspended between the beam 2 and the middle part of the roller-ball ground gear 5 by means of chains or cables 9.

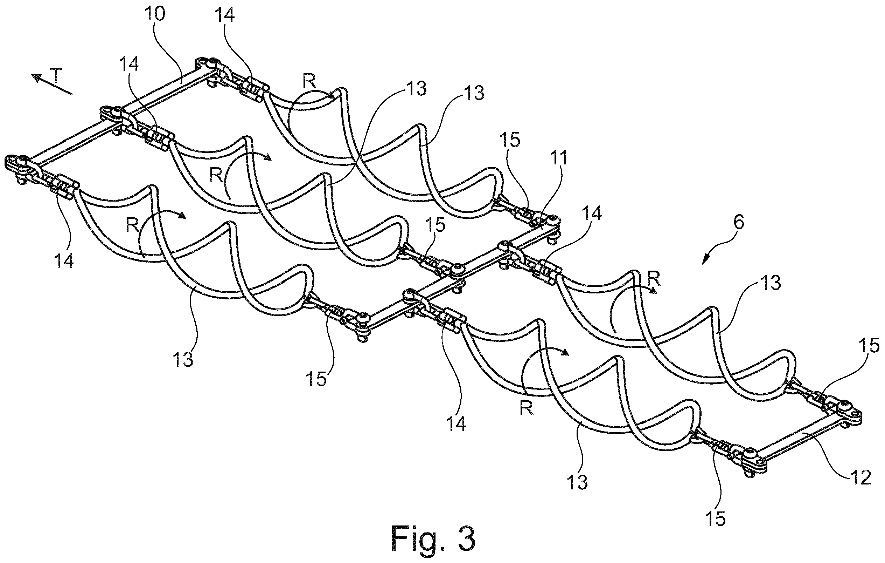

Figure 3 shows a part of the tickler means 6 in perspective view. Tickler means 6 have a first frame part 10, a second frame part 11 and a third frame part 12, these each being parallel to each other. Spiral elements 13 are arranged between each pair of first frame part 10 and second frame part 11 as well as between second frame part 11 and third frame part 12.

Each spiral element 13 is provided with a first coupling 14 and a second coupling 15, which enables rotation in the direction R about the longitudinal axis of spiral element 13, when the tickler means 6 are pulled along the seabed in the direction T.

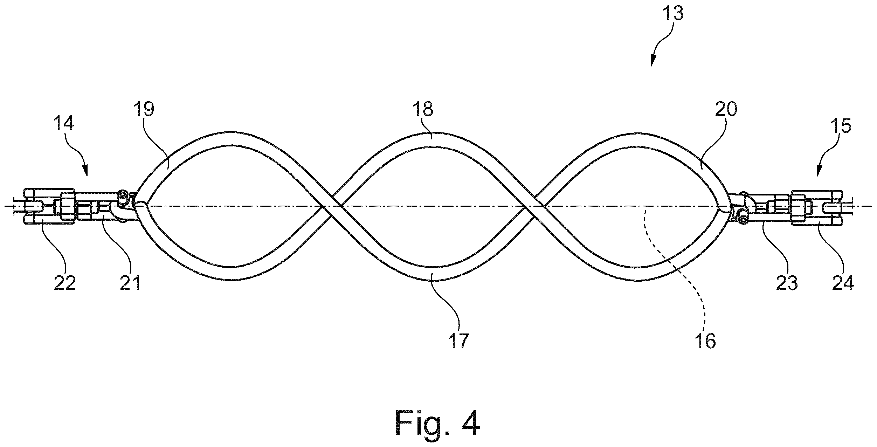

Figure 4 shows a spiral element 13 in top view. Spiral element 13 has two spiral parts 17, 18 arranged concentrically around a longitudinal axis 16 and together forming a double helix. At one end the spiral parts 17, 18 are attached with their outer ends to a first yoke part 19 and at the other end the spiral parts 17, 18 are connected with their outer ends to a second yoke part 20.

First coupling 14 is attached to the centre of the first yoke part 19 with a first coupling part 21 and the second coupling part 22 is coupled to first coupling part 21 for rotation about the longitudinal axis 16. Second coupling 15 is attached to the centre of the second yoke part 20 with a third coupling part 23 and the fourth coupling part 24 is coupled to third coupling part 23 for rotation about the longitudinal axis 16. The spiral element 13 can hereby turn around the longitudinal axis 16 in the direction R between two frame parts 10, 11, 12.

## Claims

1. Tickler means (6) for a beam trawl (1) for beam trawling, which tickler means (6) comprise at least one spiral element (13), which at least one spiral element (13) comprises:
- two spiral parts (17, 18) arranged concentrically around a longitudinal axis (16) and together forming a double helix;
- a first yoke part (19) which is attached with in each case an outer end of the first yoke part (19) to one of the spiral parts (17, 18) at one end of the two spiral parts (17, 18) in longitudinal direction;
- a second yoke part (20) which is attached with in each case an outer end of the second yoke part (20) to one of the spiral parts (17, 18) at the other end of the two spiral parts (17, 18) in longitudinal direction;
- a first coupling (14) with a first coupling part (19) which is arranged on the first yoke part and a second coupling part (22) which is arranged on the first coupling part (19) for rotation around a rotation axis, wherein the rotation axis of the second coupling part (22) is concentric with the longitudinal axis (16).

2. Tickler means (6) according to claim 1, further comprising an elongate first frame part (10) with spiral elements (13) arranged along the length of the frame part (10), wherein the second coupling part (22) of each spiral element (13) is arranged on the frame part (10) and wherein the longitudinal axis of each spiral element (13) lies substantially perpendicularly of the longitudinal axis of the first frame part (10).

3. Tickler means (6) according to claim 1 or 2,
wherein the at least one spiral element (13) further comprises a second coupling (15) with a third coupling part (23) which is arranged on the second yoke part (20) and a fourth coupling part (24) which is arranged on the third coupling part (23) for rotation around a rotation axis, wherein the rotation axis of the fourth coupling part (24) is concentric with the longitudinal axis (16).

4. Tickler means (6) according to claims 2 and 3, further comprising an elongate second frame part (11) on which the fourth coupling part (24) of each spiral element (13) is arranged along the length of the second frame part (11).

5. Beam trawl (1) for beam trawling, which beam trawl (1) comprises:
- a beam (2) with trawl heads (3) arranged on either end;
- a trawl (4) arranged on both trawl heads (3);
- a bridle (7) for attachment to a fishing line (8), which bridle (7) is coupled to the two trawl heads (3) and the beam (2); and
- tickler means (6) according to any one of the foregoing claims arranged on the beam (2).

## Patentansprüche

1. Scheuchmittel (6) für eine Baumkurre (1) zum Baumkurrenfischen, wobei das Scheuchmittel (6) mindestens ein Spiralelement (13) umfasst, wobei mindestens ein Spiralelement (13) Folgendes umfasst:
- zwei Spiralteile (17, 18), die konzentrisch um eine Längsachse (16) herum angeordnet sind und gemeinsam eine Doppelhelix bilden;
- ein erstes Jochteil (19), das in jedem Fall mit einem äußeren Ende des ersten Jochteils (19) an einem der Spiralteile (17, 18) in Längsrichtung an einem Ende der beiden Spiralteile (17, 18) angebracht ist;
- ein zweites Jochteil (20), das in jedem Fall mit einem äußeren Ende des zweiten Jochteils (20) an einem der Spiralteile (17, 18) in Längsrichtung an dem anderen Ende der beiden Spiralteile (17, 18) angebracht ist;
- eine erste Kopplung (14) mit einem ersten Kopplungsteil (19), das an dem ersten Jochteil angeordnet ist, und einem zweiten Kopplungsteil (22), das an dem ersten Kopplungsteil (19) zum Drehen um eine Drehachse angeordnet ist, wobei die Drehachse des zweiten Kopplungsteils (22) konzentrisch zur Längsachse (16) ist.

2. Scheuchmittel (6) nach Anspruch 1, das weiter ein längliches erstes Rahmenteil (10) mit Spiralelementen (13) umfasst, die entlang der Länge des Rahmenteils (10) angeordnet sind, wobei das zweite Kopplungsteil (22) jedes Spiralelements (13) am Rahmenteil (10) angeordnet ist und wobei die Längsachse jedes Spiralelements (13) im Wesentlichen senkrecht zu der Längsachse des ersten Rahmenteils (10) liegt.

3. Scheuchmittel (6) nach Anspruch 1 oder 2, wobei das mindestens eine Spiralelement (13) weiter eine zweite Kopplung (15) mit einem dritten Kopplungsteil (23), das an dem zweiten Jochteil (20) angeordnet ist, und einem vierten Kopplungsteil (24) umfasst, das an dem dritten Kopplungsteil (23) zum Drehen um eine Drehachse angeordnet ist, wobei die Drehachse des vierten Kopplungsteils (24) konzentrisch zur Längsachse (16) ist.

4. Scheuchmittel (6) nach den Ansprüchen 2 und 3, das weiter ein längliches zweites Rahmenteil (11) umfasst, an dem das vierte Kopplungsteil (24) jedes Spiralelements (13) entlang der Länge des zweiten Rahmenteils (11) angeordnet ist.

5. Baumkurre (1) zum Baumkurrenfischen, wobei die Baumkurre (1) umfasst:
- einen Baum (2) mit Schleppnetzköpfen (3), die an jedem Ende angeordnet sind;
- ein Schleppnetz (4), das an beiden Schleppnetzköpfen (3) angeordnet ist;
- eine Spanneinrichtung (7) zum Anbringen an einer Angelschnur (8), wobei die Spanneinrichtung (7) an beide Schleppnetzköpfe (3) und den Baum (2) gekoppelt ist; und
- Scheuchmittel (6) nach einem der vorstehenden Ansprüche, die am Baum (2) angeordnet sind.

## Revendications

1. Moyens de grattage (6) pour un chalut à perche (1) pour la pêche au chalut à perche, lesquels moyens de grattage (6) comprennent au moins un élément en spirale (13), lequel au moins un élément en spirale (13) comprend :
- deux parties en spirale (17, 18) agencées de manière concentrique autour d'un axe longitudinal (16) et formant ensemble une double hélice ;
- une première partie d'attelage (19) qui est fixée avec, dans chaque cas, une extrémité externe de la première partie d'attelage (19) à l'une des parties en spirale (17, 18) au niveau d'une extrémité des deux parties en spirale (17, 18) dans la direction longitudinale ;
- une seconde partie d'attelage (20) qui est fixée avec, dans chaque cas, une extrémité externe de la seconde partie de culasse (20) à l'une des parties en spirale (17, 18) au niveau de l'autre extrémité des deux parties en spirale (17, 18) dans la direction longitudinale ;
- un premier couplage (14) avec une première partie de couplage (19) qui est agencée sur la première partie d'attelage et une seconde partie de couplage (22) qui est agencée sur la première partie de couplage (19) pour une rotation autour d'un axe de rotation, dans lesquels l'axe de rotation de la seconde deuxième de couplage (22) est concentrique par rapport à l'axe longitudinal (16).

2. Moyens de grattage (6) selon la revendication 1, comprenant en outre une première partie de cadre allongée (10) avec des éléments en spirale (13) agencés sur la longueur de la partie de cadre (10), dans lesquels la deuxième partie de couplage (22) de chaque élément en spirale (13) est agencée sur la partie de cadre (10) et dans lesquels l'axe longitudinal de chaque élément en spirale (13) se trouve sensiblement perpendiculairement par rapport à l'axe longitudinal de la première partie de cadre (10).

3. Moyens de grattage (6) selon la revendication 1 ou 2, dans lesquels le au moins un élément en spirale (13) comprend en outre un second couplage (15) avec une troisième partie de couplage (23) qui est agencée sur la seconde partie d'attelage (20), et une quatrième partie de couplage (24) qui est agencée sur la troisième partie de couplage (23) pour une rotation autour d'un axe de rotation, dans lesquels l'axe de rotation de la quatrième partie de couplage (24) est concentrique par rapport à l'axe longitudinal (16).

4. Moyens de grattage (6) selon les revendications 2 et 3, comprenant en outre une seconde partie de cadre allongée (11) sur laquelle la quatrième partie de couplage (24) de chaque élément en spirale (13) est agencée sur la longueur de la seconde partie de cadre (11).

5. Chalut à perche (1) pour la pêche au chalut à perche, lequel chalut à perche (1) comprend :
- une perche (2) avec des têtes de chalut (3) agencées sur l'une ou l'autre extrémité ;
- un chalut (4) agencé sur les deux têtes de chalut (3) ;
- un bras (7) pour une fixation à une ligne de pêche (8), lequel bras (7) est couplé aux deux têtes de chalut (3) et à la perche (2) ; et
- des moyens de grattage (6) selon l'une quelconque des revendications précédentes agencés sur la perche (2).
